# EUROPÄISCHE PATENTSCHRIFT

(11) **EP 2 634 041 B1**
(45) Veröffentlichungstag und Bekanntmachung des Hinweises auf die Patenterteilung: **17.01.2018**
(21) Anmeldenummer: 13156904.8
(22) Anmeldetag: 27.02.2013
(51) Int. Cl.: B60N 2/50, B60N 2/54

(54) **Fahrzeugsitz und Nutzkraftfahrzeug mit einem Fahrzeugsitz**
Vehicle seat and commercial motor vehicle with a vehicle seat
Siège de véhicule et véhicule utilitaire doté d'un siège de véhicule

(30) Priorität: 02.03.2012 DE 102012101768
(43) Veröffentlichungstag der Anmeldung: 04.09.2013
(73) Patentinhaber: GRAMMER AG, 92224 Amberg (DE); Grammer A.S., 16369 Bursa (TR)
(72) Erfinder: Akcay, Serhat, 16130 Nilüfer/Bursa (TR); Sag, Emin Kenan, 16950 Mudanya/Bursa (TR); Ünler, Eren, 16360 Yildirim/Bursa (TR)
(74) Vertreter: Hannke, Christian

(56) Entgegenhaltungen:
- DE-A1-102010 023 065
- DE-U- 7 409 193
- FR-A- 1 340 372
- US-A- 4 186 963
- US-A- 4 817 908

## Beschreibung

Die Erfindung betrifft einen Fahrzeugsitz für ein Fahrzeug, insbesondere einen Nutzfahrzeugsitz für ein landwirtschaftliches Nutzkraftfahrzeug, mit einem Sitzteil, mit einem Rückenlehnenteil, mit einer Vertikalhauptfederungseinrichtung umfassend Spiralfederelemente und mit einer Sitzgestellvorrichtung umfassend einen ortsfest angeordneten Gestellteil, welcher karosserieseitig des Fahrzeugs befestigbar ist, und umfassend einen gefedert angeordneten Gestellteil, welcher das Sitzteil und das Rückenlehnenteil trägt.

Darüber hinaus betrifft die Erfindung ein Nutzkraftfahrzeug, insbesondere einen Traktor, mit einem Fahrzeugsitz.

Gattungsgemäße Fahrzeugsitze sind aus dem Stand der Technik vielfältig und gut bekannt. Beispielsweise ist aus der Patenschrift DE 195 07 339 C2 ein abgefederter Fahrzeugsitz mit einer Sitzeinrichtung aus einer Sitzplatte und einer Rückenlehne bekannt. Der Fahrzeugsitz weist eine L-förmig ausgestaltete Grundeinrichtung aus einer Blechkonstruktion mit einem Grundteil auf, wobei der Fahrzeugsitz mittels des Grundteils an einer Fahrzeugkarosserie befestigt wird. Die Sitzeinrichtung ist dabei mittels einer Rolleneinrichtung relativ zu der Grundeinrichtung verschieblich gelagert. Zwischen der Sitzeinrichtung und der Grundeinrichtung wirkt eine Zugfedereinrichtung umfassend zwei zueinander mindestens annähernd parallel angeordnete Zugfedern, um eine Vertikalfederung der Sitzeinrichtung am Fahrzeugsitz zu gewährleisten. Die zweite Zugfeder ist bedarfsweise zuschaltbar, so dass die erste Zugfeder allein einen Benutzer-Gewichtsbereich zwischen 50 kp und 80 kp abdeckt. Gemeinsam realisieren beide Zugfedern einen höheren Benutzer-Gewichtsbereich zwischen 80 kp und 130 kp und damit auch eine höhere Federhärte des Fahrzeugsitzes. Zusätzlich kann die Zugfedereinrichtung noch ein Paar dritte Zugfedern umfassen. Die Grundeinrichtung umfasst des Weiteren ein kastenförmiges Säulenteil, welches sich hinter der Sitzeinrichtung und speziell hinter der Rückenlehne vom Grundteil aus nach oben erstreckt. Das kastenförmige Säulenteil besteht aus einer Vielzahl an gekanteten Blechelementen, die miteinander verbunden sind. Die Zugfedern der Zugfedereinrichtung sind innerhalb dieses kastenförmigen Säulenteils gut geschützt angeordnet. Die Zugfedern sind in Aufnahmelöchern oder an Hakenelementen direkt oder indirekt an dem kastenförmigen Säulenteil einerseits und an der Sitzeinrichtung andererseits gelagert. Die Sitzeinrichtung des Fahrzeugsitzes kann mit dieser Konstruktion zwar gut gefedert werden. Darüber hinaus ist auch eine Gewichtseinstellung an unterschiedlich schwere Benutzer möglich. Jedoch baut der Fahrzeugsitz insgesamt recht aufwendig. Dies liegt zum einem an der vielteiligen Blechkonstruktion insbesondere des Säulenteils und zum anderen an der zusätzlich erforderlichen Rollenlagerung, mittels welcher die Sitzeinrichtung an der Grundeinrichtung rollbar und vertikal verschieblich gelagert ist.

Ein weiterer abgefederter Fahrzeugsitz ist aus der Gebrauchsmusterschrift DE 20 2006 003 976 U1 bekannt. Der dort gezeigte Fahrzeugsitz umfasst im Wesentlichen eine Anordnung bestehend aus einer Bodenblechplatte, bestehend aus einem daran angeschweißten feststehenden Säulenkörper aus einer mehrteiligen Blechkonstruktion, bestehend aus einer beweglichen Gruppe mit einem Sitzteil bzw. Dämpfungsteil und mit einer Rückenlehne, und bestehend aus einem Aufhängungsmechanismus, welcher zwischen dem feststehenden Säulenkörper und der beweglichen Gruppe platziert ist. Der Aufhängungsmechanismus wiederum umfasst einen Stoßdämpfer und Zugfedern, um auf den Fahrzeugsitz einwirkende Vibrationen auch aktiv dämpfen zu können. Der Stoßdämpfer ist oberseitig an zusätzlichen Aufhängebügeln des Säulenkörpers und unterseitig an der Rückenlehne der beweglichen Gruppe befestigt. Die Zugfedern sind oberseitig an weiteren Aufhängebügeln eingehängt und unterseitig über zusätzliche Spannseile mittels Verankerungsteilen mit der Rückenlehne derart verbunden, dass sie gemäß einer Belastung durch das Fahrergewicht und/oder das Gewicht der beschriebenen Anordnung usw. individuell vorgespannt werden können. Sowohl der Stoßdämpfer als auch die Zugfedern sind räumlich zwischen der Rückenlehne und dem Säulenkörper angeordnet, wodurch die Anordnung insbesondere rückseitig recht tief baut und demnach relativ viel Platz beansprucht, der in einer Fahrzeugkabine insbesondere eines Nutzkraftfahrzeugs meistens stets recht knapp bemessen ist. Die DE7409193 U zeigt einen Fahrzeugsitz gemäß Oberbegriff des Anspruchs 1. Es ist Aufgabe vorliegender Erfindung gattungsgemäße Fahrzeugsitze konstruktiv einfacher und damit auch wesentlich preiswerter zu gestalten und dennoch einen hohen Federungskomfort, insbesondere einen hohen Vertikalfederungskomfort, zu gewährleisten.

Die Aufgabe der Erfindung wird von einem Fahrzeugsitz für ein Fahrzeug gemäß Anspruch 1 gelöst. Erfindungsgemäß sind bei der Sitzgestellvorrichtung des vorliegenden Fahrzeugsitzes Rohrelemente der Sitzgestellvorrichtung zumindest teilweise bzw. bereichsweise innerhalb der Spiralfederelemente angeordnet, so dass nicht nur die Sitzgestellvorrichtung aufgrund der Rohrkonstruktion konstruktiv außerordentlich einfach bereitgestellt ist, sondern darüber hinaus auch die Vertikalhauptfederungseinrichtung äußerst platzsparend innerhalb des Fahrzeugsitzes integriert ist. Eine derartige Kombination aus einer Sitzgestellrohrkonstruktion gepaart mit einer Vertikalhauptfederungseinrichtung, deren Spiralfederelemente von der Sitzgestellrohrkonstruktion zumindest teilweise durchdringen ist, gestaltet den Fahrzeugsitz außergewöhnlich kompakt, so dass er insbesondere in engeren Fahrzeugkabinen von Nutzkraftfahrzeugen, wie beispielsweise Traktoren, äußerst vorteilhaft eingesetzt werden kann. Der Begriff "karosserieseitig" beschreibt einen Befestigungsort der ortsfest angeordneten Gestellteils an einer Karosserie des Fahrzeugs oder an der Konsole des Fahrzeugsitzes, welche an der Karosserie befestigt ist.

Zu diesem ortsfest angeordneten Gestellteil ist der gefedert gelagerte Gestellteil insbesondere translatorisch verschieblich gelagert.

Dementsprechend wird die Aufgabe der Erfindung auch von einem Fahrzeug und speziell von einem Nutzkraftfahrzeug, insbesondere von einem Traktor, mit einem Fahrzeugsitz gelöst, bei welchem sich der Fahrzeugsitz durch wenigstens eines der hier beschriebenen Merkmale auszeichnet.

Bei den ersten Rohrelementen handelt es sich vorzugsweise um ein Rohrelementepaar, bei welchem zwei erste Rohrelemente nebeneinander und voneinander beabstandet angeordnet sind.

Hierbei sind die Rohrelemente derart gegenüber den Spiralfederelementen angeordnet, dass sie fluchtend zu den Spiralfederelementen angeordnet sind, wobei sie sich innerhalb der Spiralfederelemente in Längsrichtung dieser erstrecken.

Die Sitzgestellvorrichtung ist erfindungsgemäß außerordentlich einfach konstruiert, indem das ortsfest angeordnete Gestellteil und gegebenenfalls das gefedert angeordnete Gestellteil jeweils durch eine Rohrkonstruktion L-förmig ausgestaltet sind.

Die vorliegende Konstruktion kann weiter wesentlich vereinfacht werden, wenn sowohl die Spiralfederelemente als auch die darin angeordneten Rohrelemente in Federrichtung der Vertikalhauptfederungseinrichtung ausgerichtet angeordnet sind. Insofern ist sind die Wirkungslinien der Spiralfederelemente im Wesentlichen in Federrichtung ausgerichtet.

Die Spiralfederelemente der vorliegenden Vertikalhauptfederungseinrichtung und die darin zumindest teilweise angeordneten Rohrelemente der Sitzgestellvorrichtung sind im Wesentlichen hochkant und darüber hinaus quer zur Vorwärtsfahrrichtung angeordnet.

Die vorliegenden Spiralfederelemente sind idealerweise als Druckfederelemente ausgeführt, so dass das vorteilhafter Weise auf aufwendiger gestaltete Aufhängungseinrichtungen zum Aufhängen der Spiralfederelemente verzichtet werden kann, wie dies im Stand der Technik der Fall ist.

Somit ist es vorteilhaft, wenn die Vertikalhauptfederungseinrichtung zumindest Vertikalfederelemente umfasst, welche zwischen dem ortsfest angeordneten Gestellteil und dem gefedert angeordneten Gestellteil federnd wechselwirken. Die erfindungsgemäße Ausführungsvariante sieht vor, dass das ortsfest angeordnete Gestellteil eine erste Teilrohrkonstruktion mit ersten Rohrelementen der Sitzgestellvorrichtung umfasst, wobei diese ersten Rohrelemente zumindest teilweise jeweils innerhalb der Spiralfederelemente angeordnet sind. Hierzu sind die Spiralfederelemente einfach auf die ersten Rohrelemente des ortsfest angeordneten Gestellteils aufgesteckt.

Die Vertikalhauptfederungseinrichtung ist erfindungsgemäß realisiert, indem die ersten Rohrelemente erste Vertikalrohrelementbereiche des ortsfest angeordneten Gestellteils umfassen, die im Wesentlichen senkrecht gegenüber ersten Horizontalrohrelementbereichen ausgerichtet zumindest teilweise innerhalb vertikal angeordnete Spiralfederelemente angeordnet sind.

Insofern ist es vorteilhaft, wenn sowohl die Spiralfederelemente als auch die darin angeordneten Vertikalrohrelementbereiche in Federrichtung ausgerichtet angeordnet sind.

Die ersten Rohrelemente sind im Sinne der vorliegenden Erfindung Bestandteile des ortsfest angeordneten Gestellteils.

Die Vertikalhauptfederungseinrichtung kann konstruktiv insbesondere hinsichtlich des vorstehend beschriebenen Rohrelementepaars weiter vereinfacht werden, wenn erste Rohrelemente des ortsfest angeordneten Gestellteils im Wesentlichen parallel zueinander angeordnet sind.

Vorzugsweise sind hierbei sowohl die ersten Vertikalrohrelementbereiche als auch die ersten Horizontalrohrelementbereiche der Rohrelemente des ortsfest angeordneten Gestellteils im Wesentlichen parallel zueinander angeordnet.

Insbesondere die Sitzgestellvorrichtung kann hinsichtlich ihres benötigten Bauraums extrem weiter verkleinert werden, wenn das ortsfest angeordnete Gestellteil eine erste Teilrohrkonstruktion mit ersten eine Vertikalebene aufspannenden Rohrelementen umfasst, wobei der gefederte gelagerte Gestellteil zumindest teilweise innerhalb dieser Vertikalebene federnd gelagert angeordnet ist.

Insbesondere die Sitzgestellvorrichtung kann noch kompakter gebaut werden, wenn das ortsfest angeordnete Gestellteil eine erste Teilrohrkonstruktion mit ersten eine Vertikalebene aufspannenden Rohrelementen umfasst, wobei die Vertikalhauptfederungseinrichtung zumindest teilweise innerhalb dieser Vertikalebene angeordnet ist, und insbesondere die Spiralfederelemente sich entlang dieser Vertikalebene oder parallel hierzu erstreckend angeordnet sind.

Darüber hinaus sieht einer weitere bevorzugte Ausführungsvariante vor, dass das gefedert angeordnete Gestellteil eine weitere Rohrkonstruktion mit weiteren Rohrelementen der Sitzgestellvorrichtung umfasst, bei welcher die weiteren Rohrelemente weitere Vertikalrohrelementbereiche des gefedert angeordneten Gestellteils ausgestalten, wobei die weiteren Vertikalrohrelementbereiche sich innerhalb einer von den ersten Vertikalrohrelementbereichen des ortsfest angeordneten Gestellteils aufgespannten Vertikalebene erstreckend angeordnet sind. Hierdurch kann die gesamte Sitzgestellvorrichtung hinsichtlich eines erforderlichen Bauraums nochmals kompakter gebaut werden.

Eine besonders gute Platzersparnis kann erzielt werden, wenn die weiteren Vertikalrohrelementbereiche des gefedert angeordneten Gestellteils zwischen den ersten Vertikalrohrelementbereichen des ortsfest angeordneten Gestellteils angeordnet sind.

Hierbei sind die weiteren Vertikalrohrelementbereiche des gefedert angeordneten Gestellteils insbesondere in Bezug auf die Federrichtung der vorliegenden Vertikalfederungseinrichtung vorteilhafter Weise radial weiter innen liegend angeordnet als die ersten Vertikalrohrelementbereiche des ortsfest angeordneten Gestellteils.

Es ist weiter vorteilhaft, wenn die weiteren Vertikalrohrelementbereiche des gefedert angeordneten Gestellteils im Wesentlichen parallel zueinander und die weiteren Horizontalrohrelementbereiche des gefedert angeordneten Gestellteils v-förmig zueinander angeordnet sind.

Sind die weiteren Vertikalrohrelementbereiche des gefedert angeordneten Gestellteils im Wesentlichen parallel zueinander angeordnet, können sie konstruktiv besonders einfach geführt werden, wenn das gefedert angeordneten Gestellteil in Federrichtung schwingt.

Sind hingegen die weiteren Horizontalrohrelementbereiche des gefedert angeordneten Gestellteils v-förmig zueinander angeordnet, kann vorteilhafter Weise eine ausreichend breit gefächerte Auflage zum Auflegen des Sitzteils auf das gefedert angeordnete Gestellteil bereit gestellt werden, selbst wenn die beiden die weiteren Vertikalrohrelementbereiche des gefedert angeordneten Gestellteils konstruktiv weiter zusammen angeordnet sind.

Eine besonders vorteilhafte Ausführungsvariante sieht vor, dass die Sitzgestellvorrichtung eine Brückeneinrichtung mit einem oberen Brückenteilelement und einem unteren Brückenteilelement zum konstruktiven Verbinden des ortsfest angeordneten Gestellteils und des gefedert angeordneten Gestellteils umfasst, wobei das untere Brückenelement an ersten Rohrelementen des ortsfest angeordneten Gestellteils festlegbar und das obere Brückenelement an den ersten Rohrelementen schwingbar angeordnet sind. Hierdurch kann das gefedert angeordneten Gestellteil konstruktiv einfach gegenüber dem ortsfest angeordneten Gestellteils schwingend gehaltert werden.

Es versteht sich, dass hierbei das obere Brückenelement an dem gefedert angeordneten Gestellteil festgelegt ist und das gefedert angeordnete Gestellteil aber gegenüber dem unteren Brückenelement frei beweglich gelagert ist.

Des Weiteren ist es vorteilhaft, wenn das obere Brückenteilelement und das untere Brückenteilelement durch die Spiralfederelemente zueinander beabstandet gehalten sind.

Die Spiralfederelemente stützen sich hierbei sowohl an dem oberen Brückenteilelement als auch an dem unteren Brückenteilelement vorteilhaft ab.

Hierdurch können sich die Spiralfederelemente mittels der Brückenteilelemente konstruktiv einfach sogleich an dem ortsfest angeordneten Gestellteil oder an dem gefedert angeordneten Gestellteil abstützen.

Sind das obere Brückenteilelement und das untere Brückenteilelement zumindest teilweise in einer von ersten Rohrelementen des ortsfest angeordneten Gestellteils aufgespannten Vertikalebene angeordnet, kann insbesondere die Sitzgestellvorrichtung hinsichtlich ihres benötigten Raumbedarfs weiter optimiert werden.

Kumulativ ist es zudem sehr vorteilhaft, wenn die Sitzgestellvorrichtung eine Schwingungsdämpfereinrichtung mit Schwingungsdämpfungselementen umfasst, welche zumindest einige der Rohrelemente der Sitzgestellvorrichtung konzentrisch umgeben.

Idealerweise sind die Schwingungsdämpfungselementen als Reibgleitlagerungen ausgestaltet, welche Lageraugen bereitstellen, in welchen die Rohrelemente sich reibend bewegen können, wodurch eine kinetische Schwingungsenergie des gefedert angeordneten Gestellteils auf baulich einfache Weise reduziert werden kann.

Auch die Schwingungsdämpfereinrichtung kann konstruktiv sehr einfach realisiert werden, wenn die Schwingungsdämpfungselemente an Brückenteilelementen einer Brückeneinrichtung zum konstruktiven Verbinden des ortsfest angeordneten Gestellteils und des gefedert angeordneten Gestellteils angeordnet sind.

Hierzu können die Schwingungsdämpfungselemente in entsprechenden Aufnahmen der Brückenteilelemente eingeklebt, eingepresst oder dergleichen sein.

Insofern ist es vorteilhaft, wenn kumulativ oder alternativ die Schwingungsdämpfereinrichtung und insbesondere deren Schwingungsdämpfungselemente zumindest teilweise in einer von ersten Rohrelementen des ortsfest angeordneten Gestellteils aufgespannten Vertikalebene angeordnet sind.

Um den Fahrzeugsitz insbesondere hinsichtlich einer bevorzugten und komfortablen Vertikalschwingungsfrequenz von etwa 1,25 Hz besser auf unterschiedliche Passagiere manuell einstellen zu können, ist es besonders vorteilhaft, wenn die Sitzgestellvorrichtung eine Gewichtseinstelleinrichtung mit wenigstens einem Zugfederelement umfasst, mittels welchem Vorspannkräfte der Spiralfederelemente in Abhängigkeit eines Passagiers variabel einstellbar sind.

Der Platzbedarf am Fahrzeugsitz kann weiter reduziert werden, wenn die Gewichtseinstelleinrichtung zumindest teilweise in einer von ersten Rohrelementen des ortsfest angeordneten Gestellteils aufgespannten Vertikalebene angeordnet ist, und insbesondere das Zugfederelement sich entlang dieser Vertikalebene oder parallel hierzu erstreckend angeordnet ist.

Das Zugfederelement ist darüber hinaus vorzugsweise baulich besonders platzsparend parallel zu den Spiralfederelementen angeordnet, so dass die Wirkungslinie des Zugfederelements idealerweise in Federrichtung ausgerichtet ist.

Ist die Gewichtseinstelleinrichtung sowohl zwischen ersten Vertikalrohrelementbereichen des ortsfest angeordneten Gestellteils als auch zwischen weiteren Vertikalrohrelementbereichen des gefedert angeordneten Gestellteils angeordnet, kann sie äußerst kompakt in die vorliegende Sitzgestellvorrichtung integriert werden.

Bei einer sehr abgespeckten und somit kostengünstigeren Ausführungsvariante kann aber auch speziell auf dieses Zugfederelement verzichtet werden, um die Vertikalschwingungsfrequenz selbst bei leichteren und schwereren Personen im Bereich von 1,25 Hz halten zu können.

Idealerweise kann hierbei speziell die Schwingungsdämpfungseinrichtung derart ausgelegt werden, dass die Reibung in Bezug auf leichtere und schwerere Personen fast eine proportionale Schwingungsbeschleunigen verursachen. Insofern kann hierdurch eine automatische Gewichtseinstellung erzielt werden, bei welcher die Schwingungsfrequenz bei leichteren Personen etwas unterhalb 1,25 Hz und bei schwereren Personen etwa oberhalb von 1,25 Hz liegen.

Eine zusätzliche Höheneinstelleinrichtung kann vorliegend baulich besonders einfach bereitgestellt werden, wenn Rohrelemente des ortsfest angeordneten Gestellteils entlang ihrer Längserstreckung ein Vielzahl an voneinander beabstandeten Querlöchern zur Aufnahme von Haltebolzenelementen wenigstens einer der Brückenteilelemente der vorliegenden Brückeneinrichtung aufweist.

Vorzugsweise ist hierdurch das untere Brückenteilelement in Federrichtung der vorliegenden Vertikalhauptfederungseinrichtung in unterschiedlichen Höhen an dem ortsfest angeordneten Gestellteil festlegbar, so dass der Fahrzeugsitz auf einfachste konstruktive Weise vorteilhaft an unterschiedlich große Passagiere angepasst werden kann.

Zusammenfassend kann festgehalten werden, dass sich der vorliegende Fahrzeugsitz insbesondere durch eine Sitzgestellvorrichtung auszeichnet, welche ein ortsfest angeordnetes Gestellteil in Gestalt einer Rohrkonstruktion aufweist, und Rohrelemente, insbesondere diesbezügliche Vertikalrohrelementbereiche, dieser Rohrkonstruktion eine Vertikalebene formulieren, in welcher idealerweise zumindest jeweils teilweise weitere Rohrelemente des gefedert angeordneten Gestellteils, die Vertikalhauptfederungseinrichtung, die Brückeneinrichtung, die Schwingungsdämpfereinrichtung, die Gewichtseinstelleinrichtung und/oder die Höheneinstelleinrichtung des vorliegenden Fahrzeugsitzes außerordentlich kompakt auf kleinstem Bauraum innerhalb der Sitzgestellvorrichtung platziert werden können.

Vorteilhafter Weise ist der vorliegende Fahrzeugsitz derart konstruiert, dass im Wesentlichen auf eine Schweißkonstruktion verzichtet werden kann. Insofern kann speziell hinsichtlich der tragenden Teile, wie etwa die Rohrkonstruktionen, des Fahrzeugsitzes auf geschweißte Teile verzichtet werden.

Dies trifft insbesondere auf die vorliegende Sitzgestellvorrichtung zu, welche idealerweise nur als Steck- und/oder Schraubkonstruktion ausgeführt ist. Hierdurch gelingt eine äußerst einfache Montage, wobei auch die Produktionskosten des Fahrzeugsitzes sehr niedrig gehalten werden können.

Weitere Vorteile, Ziele und Eigenschaften vorliegender Erfindung werden anhand anliegender Zeichnung und nachfolgender Beschreibung erläutert, in welchen beispielhaft ein Fahrzeugsitz mit einer Sitzgestellvorrichtung aus einer Rohrkonstruktion, deren Rohrelemente zumindest teilweise innerhalb von Spiralfederelementen einer Vertikalhauptfederungseinrichtung angeordnet sind, dargestellt und beschrieben ist. In der Zeichnung zeigen:
- Figur 1: schematisch eine Explosionsansicht einer vorteilhaften Sitzgestellvorrichtung für Fahrzeugsitze (siehe Figuren 6 und 7) von landwirtschaftlich genutzten Fahrzeugen umfassend eine Rohrkonstruktion mit teilweise innerhalb von Spiralfederelementen einer Vertikalhauptfederungseinrichtung angeordneten Rohrelementen;
- Figur 2: schematisch eine perspektivische Ansicht der Sitzgestellvorrichtung aus der Figur 1;
- Figur 3: schematisch eine Seitenansicht der Sitzgestellvorrichtung aus den Figuren 1 und 2;
- Figur 4: schematisch eine Rückansicht der Sitzgestellvorrichtung aus den Figuren 1 bis 3;
- Figur 5: schematisch eine Vorderansicht der Sitzgestellvorrichtung aus den Figuren 1 bis 4;
- Figur 6: schematisch eine Seitenansicht des Fahrzeugsitzes mit der Sitzgestellvorrichtung aus den Figuren 1 bis 5; und
- Figur 7: schematisch eine Seitenansicht eines alternativen Fahrzeugsitzes mit der Sitzgestellvorrichtung aus den Figuren 1 bis 6, aber mit getrennten Sitz- und Rückenlehnenteilen.

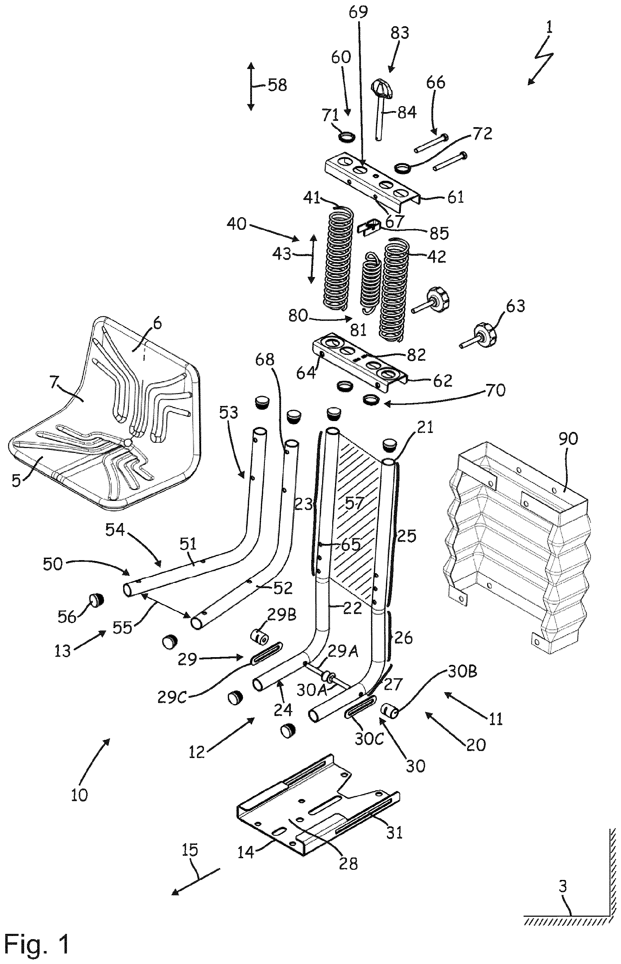

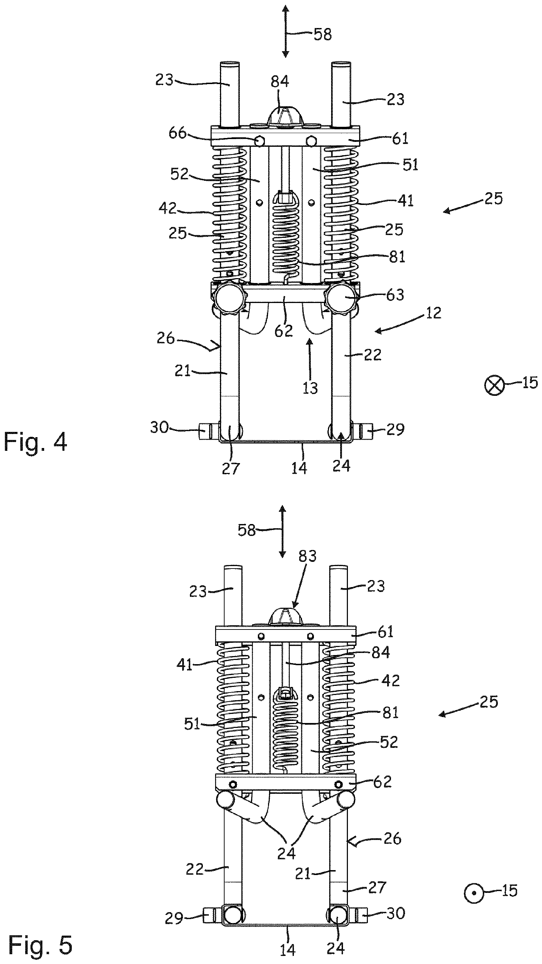

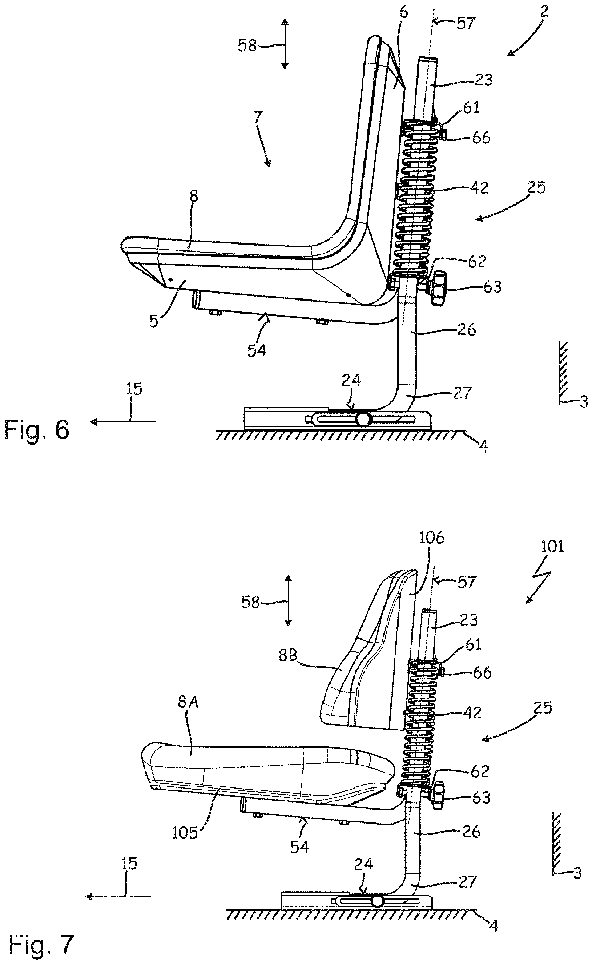

Der in den Figuren 1 bis 6 gezeigte erste Fahrzeugsitz 1 wird als Nutzfahrzeugsitz 2 eines hier nicht näher gezeigten landwirtschaftlichen Nutzkraftfahrzeug 3 (siehe Figur 6) eingesetzt und ist innerhalb einer Fahrzeugkabine (hier nicht gezeigt) an einem Fahrzeugkabinenboden 4 fest montiert.

Der erste Fahrzeugsitz 1 umfasst ein Sitzteil 5 und ein Rückenlehnenteil 6, welche in diesem ersten Ausführungsbeispiel (Figuren 1 bis 6) beide mit einer kompakten Fahrzeugsitzschale 7 realisiert sind, so dass der erste Fahrzeugsitz 1 vorteilhafter Weise lediglich mit einem einzigen Polstersitzteil 8 ausgestattet werden muss.

Ein alternativ in der Figur 7 gezeigter Fahrzeugsitz 101 weist ebenfalls ein Sitzteil 105 und ein Rückenlehnenteil 106 auf, die jedoch getrennt voneinander ausgestaltet sind, so dass in diesem weiteren Ausführungsbeispiel (Figur 7) ein separates Sitzpolsterteil 8A und ein separates Rückenlehnenpolsterteil 8B an dem alternativen Fahrzeugsitz 101 verbaut sind. Der alternative Fahrzeugsitz 101 kann ebenfalls innerhalb einer Fahrzeugkabine (hier nicht gezeigt) an einem Fahrzeugkabinenboden 4 (siehe Figuren 6 und 7) fest montiert werden.

Beide Fahrzeugsitze 1 und 101 umfassen aber eine besonders vorteilhaft konstruierte Sitzgestellvorrichtung 10, welche als Rohrkonstruktion 11 ausgestaltet ist und einen ortsfest angeordneten Gestellteil 12 sowie einen hierzu gefedert angeordneten Gestellteil 13 aufweist.

Das ortsfest angeordnete Gestellteil 12 ist über eine Bodenplatte 14 an dem Fahrzeugkabinenboden 4 ortsfest derart montiert, so dass die Fahrzeugsitze 1 und 101 jeweils in Vorwärtsfahrtrichtung 15 ausgerichtet an dem Fahrzeugkabinenboden 4 angeordnet sind.

Der ortsfest angeordnete Gestellteil 12 umfasst eine erste Teilrohrkonstruktion 20, welche sich im Wesentlichen aus einem ersten L-förmig gebogenen Rohrelement 21 und einem zweiten L-förmig gebogenen Rohrelement 22 zusammensetzt.

Das erste L-förmig gebogene Rohrelement 21 und das zweite L-förmig gebogene Rohrelement 22 sind hierbei parallel zueinander angeordnet. Sie können aus einem einzigen Rohrstück gebogen oder aus Einzelrohrteilen zusammengesetzt sein.

Jedes der Rohrelemente 21 bzw. 22 zeichnet sich durch einen Vertikalrohrelementbereich 23 (hier nur exemplarisch) und einen Horizontalrohrelementbereich 24 (hier nur exemplarisch beziffert) aus.

Die Horizontalrohrelementbereiche 24 sind hierbei in Vorwärtsfahrtrichtung 15 orientiert in der Sitzgestellvorrichtung 10 montiert, während die Vertikalrohrelementbereiche 23 hierzu nahezu senkrecht nach oben zeigend von den Horizontalrohrelementbereichen 24 abstehen.

Die Vertikalrohrelementbereiche 23 weisen jeweils einen Federfunktionsabschnitt 25 zum Aufnehmen einer Federeinrichtung 40 mit ihren zwei Spiralfederelementen 41 und 42 auf.

Die Spiralfederelemente 41, 42 sind konstruktiv einfach auf Höhe der Vertikalrohrelementbereiche 23 auf die ersten Rohrelemente 21 bzw. 22 aufgesteckt, so dass die Federeinrichtung 40 nahezu keinen zusätzlichen Bauraum einnimmt, wie dies im Stand der Technik der Fall ist.

Die beiden Spiralfederelemente 41 und 42 werden hierbei von den Rohrelementen 21 bzw. 22 durchdrungen. Dies ist nur möglich, da die Rohrelementen 21 bzw. 22 fluchtend zu der Längserstreckung 43 des jeweiligen Spiralfederelements 41 bzw. 42 angeordnet sind.

Die beiden Spiralfederelemente 41 und 42 sind hierbei mittels einer später noch ausführlicher erläuterten Brückeneinrichtung 60 an der Sitzgestellvorrichtung 10 gehaltert.

Der jeweilige Federfunktionsabschnitt 25 ist hinsichtlich eines Verbindungsabschnitts 26 hierbei leicht nach hinten geneigt, um den Sitzkomfort weiter zu erhöhen.

Die Vertikalrohrelementbereiche 23 sind über einen Krümmerabschnitte 27 (hier nur exemplarisch) mit den Horizontalrohrelementbereichen 24 verbunden.

Insofern stellen die jeweiligen Horizontalrohrelementbereiche 24, die Krümmerabschnitte 27, die Verbindungsabschnitte 26 und die Federfunktionsabschnitte 25 die Einzelrohrteile der Rohrelemente 21 bzw. 22 dar.

Die Sitzgestellvorrichtung 10 kann in ihrer Gesamtheit an den Horizontalrohrelementbereichen 24 in Vorwärtsfahrtrichtung 15 bzw. entgegen der Vorwärtsfahrtrichtung 15 translatorisch verschoben werden. Somit ist eine konstruktiv sehr einfache Längsverstellung des Fahrzeugsitzes 1 möglich. Hierzu sind die Horizontalrohrelementbereiche 24 an der Bodenplatte 14 verschieblich festlegbar. Die Horizontalrohrelementbereiche 24 werden in einen C-förmig gebogenen Halte- und Führungsbereich 28 eingesteckt und mittels zwei Schraubverbindungen 29 und 30 an der Bodenplatte 14 festgelegt. Eine translatorische Verlagerung der Sitzgestellvorrichtung 10 an der Bodenplatte 14 kann mittels bodenplattenseitig vorgesehenen Langlöchern 31 (hier nur exemplarisch beziffert) besonders einfach bewerkstelligt werden.

Jede der zwei Schraubverbindungen 29 bzw. 30 umfasst jeweils ein an dem ortsfest angeordneten Gestellteil 12 festgelegtes Schraubenelement 29A bzw. 30A sowie ein Kontermutterelement 29B bzw. 30B und ein Längsverstellungsgriffelement 29C bzw. 30C. Mittels des jeweiligen Längsverstellungsgriffelements 29C bzw. 30C können die Schraubverbindungen 29 bzw. 30 festgezogen oder gelöst werden.

Hierzu sind die Schraubenelemente 29A und 30A durch die Horizontalelementebereiche 24 und dem jeweiligen Längsverstellungsgriffelement 29C und 30C hindurchgesteckt und in das zugehörige Kontermutterelement 29B bzw. 30B eingeschraubt.

Um die Schraubverbindungen 29 und 30 festziehen oder lösen zu können, wird das jeweilige Kontermutterelement 29B und 30B mit Hilfe des entsprechenden Längsverstellungsgriffelements 29C und 30C gedreht.

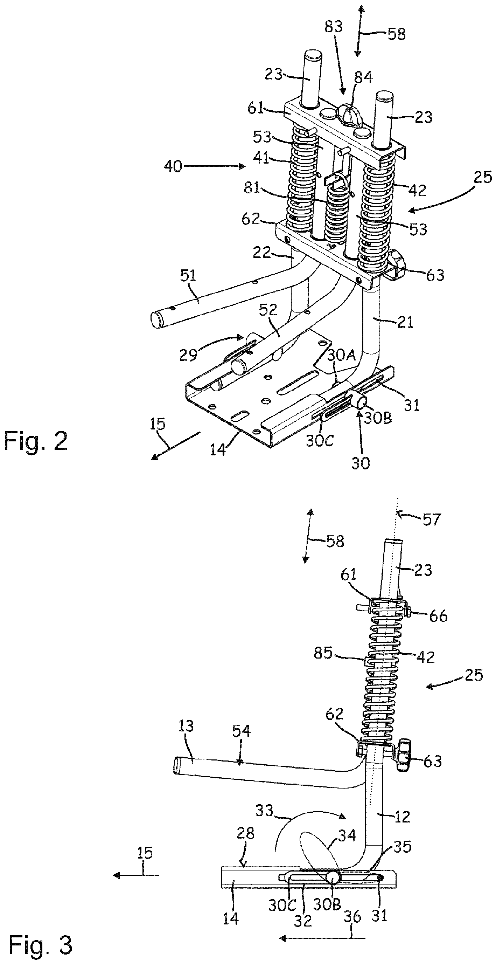

Die Funktionsweise der vorliegenden Bedienung dieser Längsverstellung wird beispielhaft anhand der Schraubverbindung 30 beschrieben (siehe Figur 3).

Hinsichtlich der Darstellung gemäß der Figur 3 wird davon ausgegangen, dass die beiden Schraubverbindungen 29 und 30 festgezogen sind, so dass eine Längsverstellung nicht möglich ist. Hierbei befindet sich das Längsverstellungsgriffelement 30C in einer in Vorwärtsfahrtrichtung 15 zeigenden Ausgangslage 32.

Zum Lösen der Schraubverbindung 30 wird das Längsverstellungsgriffelement 30C gemäß einer Losdrehrichtung 33 um die Rotationsachse (hier nicht explizit beziffert) des Schraubenelements 30A in weitere Durchgangslagen 34 (hier nur explizit beziffert) bis in eine hintere Endlage 35 hinein bewegt.

In dieser Endlage 35 angekommen wird das Längsverstellungsgriffelement 30C gemäß einer Translationsrichtung 36 in Vorwärtsfahrtrichtung 15 translatorisch nach vorne und wieder zurück in die Ausgangslage 32 verschoben.

Anschließend kann das Längsverstellungsgriffelement 30C wieder gemäß der Losdrehrichtung 33 bewegt werden, um die Schraubverbindung 30 weiter lösen zu können.

Soll die Schraubverbindung 30 wieder festgezogen werden, wird der vorstehend beschriebene Bewegungsablauf umgekehrt.

Insofern zeichnet sich die vorliegende Längsverstellung durch wenigstens ein sowohl rotatorisch als auch translatorisch verlagerbares Längsverstellungsgriffelement 29C bzw. 30C aus.

Da mittels der vorstehend erläuterten Schraubverbindungen 29 und 30 eine besonders platzsparende Längsverstellung an einem Fahrzeugsitz bereitgestellt werden kann, sind die diesbezüglichen Merkmale auch ohne die übrigen Merkmale der Erfindung wesentlich.

Der gefedert angeordnete Gestellteil 13 umfasst eine weitere Teilrohrkonstruktion 50 aus weiteren L-förmig gebogenen Rohrelementen 51 und 52, die jeweils aus einem einzigen Rohrteilstück (nicht explizit beziffert) gebogen sind.

Die beiden weiteren L-förmig gebogenen Rohrelemente 51 und 52 sind hierbei derart in die Sitzgestellvorrichtung 10 integriert, dass sie jeweils einen weiteren Vertikalrohrelementbereich 53 und einen weiteren Horizontalrohrelementbereich 54 bereitstellen.

Die weiteren Vertikalrohrelementbereiche 53 der weiteren L-förmig gebogenen Rohrelemente 51 und 52 verlaufen hierbei im Wesentlichen parallel zueinander, während die weiteren Horizontalrohrelementbereiche 54 der weiteren L-förmig gebogenen Rohrelemente 51 und 52 im Wesentlichen V-förmig zueinander angeordnet sind, so dass der gefedert angeordnete Gestellteil 13 vorteilhafter Weise ohne zusätzliche Bauteile auch quer zur Vorwärtsfahrtrichtung 15 eine möglichst große breite Auflage 55 zum stabilen und sicheren Auflegen des Sitzteils 5 bzw. 105 bietet.

Hierbei sind die weiteren Horizontalrohrelementbereiche 54 ebenfalls in Vorwärtsfahrtrichtung 15 orientiert in der Sitzgestellvorrichtung 10 angeordnet.

Alle L-förmig gebogenen Rohrelemente 21, 22 und 51, 52 der Sitzgestellvorrichtung 10 sind mit Blindstopfen 56 (hier nur exemplarisch beziffert) als jeweiliger Endabschluss versehen.

Die Sitzgestellvorrichtung 10 baut besonders kompakt, da die weiteren Vertikalrohrelementbereiche 53 des gefedert angeordneten Gestellteils 13 sich innerhalb einer von den ersten Vertikalrohrelementbereichen 23 des ortsfest angeordneten Gestellteils 12 aufgespannten Vertikalebene 57 (siehe insbesondere Figuren 1, 2 und 3) erstreckend angeordnet sind.

Insofern sind die weiteren Vertikalrohrelementbereiche 53 des gefedert angeordneten Gestellteils 13 auch platzsparend zwischen den ersten Vertikalrohrelementbereichen 23 des ortsfest angeordneten Gestellteils 12 angeordnet, während die weiteren Horizontalrohrelementbereiche 54 oberhalb der ersten Horizontalrohrelementbereiche 24 platziert sind.

Um das ortsfest angeordnete Gestellteil 12 und das gefedert angeordnete Gestellteil 13 betriebssicher zueinander halten und insbesondere das gefedert angeordnete Gestellteil 13 gemäß einer Hauptfederrichtung 58 an dem ortsfest angeordneten Gestellteil 12 führen zu können, umfasst die Sitzgestellvorrichtung 10 eine Brückeneinrichtung 60 mit einem oberen Brückenteilelement 61 und einem unteren Brückenteilelement 62, wobei das untere Brückenelement 62 an den ersten Rohrelementen 21 und 22 des ortsfest angeordneten Gestellteils 12 festlegbar ist.

Hierzu weist die Brückeneinrichtung 60 zwei händisch bedienbare Bolzenelemente 63 (nur exemplarisch beziffert) auf, welche durch Bohrungen 64 des unteren Brückenteilelements 62 hindurch in jeweils eine der Querbohrungen 65 (hier nur exemplarisch beziffert) an den L-förmig gebogenen Rohrelementen 21 bzw. 22 eingesteckt werden kann. Hierbei sind Querbohrungen 65 in unterschiedlichen Höhen an den L-förmig gebogenen Rohrelementen 21 bzw. 22 vorgesehen.

Hingegen ist das obere Brückenteilelement 61 an den ersten Rohrelementen 21 und 22 des ortsfest angeordneten Gestellteils 12 schwingbar angeordnet, so dass das gefedert angeordnete Gestellteil 13 gemäß der Vertikalhauptfederrichtung 58 auf und ab schwingen kann.

Des Weiteren ist der gefedert angeordnete Gestellteil 13 mittels Haltestifte 66 (hier nur exemplarisch beziffert) an dem oberen Brückenteilelement 61 festgelegt, so dass diese gemeinsam auf und ab schwingen können. Die Haltestifte 66 werden hierzu durch entsprechende Bohrungen 67 in dem oberen Brückenteilelement 61 und weitere obere Querbohrungen 68 in dem gefedert gelagert angeordneten Gestellteil 13 eingesteckt.

Vorteilhafter Weise sind das obere Brückenteilelement 61 und das untere Brückenteilelement 62 durch die beiden Spiralfederelemente 41 und 42 zueinander beabstandet gehalten, so dass sie nicht aufeinander aufschlagen können.

Die Brückenteilelemente 61 und 62 sind insbesondere in Bezug auf die Vorwärtsfahrtrichtung 15 quer in der Sitzgestellvorrichtung 10 verbaut, so dass insbesondere das Rückenlehnenteil 6 bzw. 106 sehr nahe bis an die Vertikalhauptfederungseinrichtung 40 heranreichen kann.

Damit die vorstehend beschriebenen Brückenteilelemente 61 und 62 überhaupt mit den Rohrelementen 21, 22 bzw. 51 und 52 korrespondieren können, weisen sie entsprechende Aufnahmelöcher 69 (hier nur exemplarisch beziffert) auf, in welche die Rohrelemente 21, 22 bzw. 51 und 52 eingeschoben werden können.

Es versteht sich, dass hierbei unterschiedliche Lagerbuchsen 70 oder dergleichen zum Einsatz kommen können, um die Brückenteilelemente 61 und 62 ausreichend gut an den Rohrelementen 21, 22 bzw. 51 und 52 oder umgekehrt lagern zu können.

Zumal kann mit geeignet ausgestalteten Lagerbuchsen 70 (hier nur exemplarisch beziffert) sogleich eine äußerst einfach bauende Schwingungsdämpfereinrichtung mit vorteilhaften Schwingungsdämpfungselementen 71 (hier ebenfalls nur exemplarisch beziffert) realisiert werden, wenn diese die Rohrelemente 21, 22 bzw. 51, 52 konzentrisch umgeben und hierbei dauerhaft für eine entsprechende schwingungsdämpfende Reibung zwischen den Lagerbuchsen 70 und den Rohrelementen 21, 22 bzw. 51, 52 sorgen.

Insofern stellen die Lagerbuchsen 70 sogleich äußerst einfach bauende Trockenreibelemente 72 (nur exemplarisch beziffert) dar, welche das Auf- und Abfedern des federnd angeordneten Gestellteils 13 dämpfen können. Somit kann vorteilhafter Weise auf weitere Hydraulikdämpfer oder dergleichen verzichtet werden, so dass die Sitzgestellvorrichtung 10 nochmals einfacher baut.

Konstruktiv besonders einfach und somit auch extrem vorteilhaft sind die Schwingungsdämpfungselemente 71 unmittelbar an den Brückenteilelementen 61 und 62 der Brückeneinrichtung 60 zum konstruktiven Verbinden des ortsfest angeordneten Gestellteils 12 und des gefedert angeordneten Gestellteils 13 angeordnet.

Der Komfort ist vorliegend noch weiter dadurch erhöht, dass die Sitzgestellvorrichtung 10 eine Gewichtseinstelleinrichtung 80 umfasst, welche ein Zugfederelement 81 umfasst, mittels welchem Vorspannkräfte der beiden Spiralfederelemente 41 und 42 in Abhängigkeit eines Passagiers variabel einstellbar sind.

Vorteilhafter Weise ist die Gewichtseinstelleinrichtung 80 sowohl zwischen ersten Vertikalrohrelementbereichen 23 des ortsfest angeordneten Gestellteils 12 als auch zwischen weiteren Vertikalrohrelementbereichen 53 des gefedert angeordneten Gestellteils 13 angeordnet, so dass ein Bauraum innerhalb der Sitzgestellvorrichtung 10 noch optimaler ausgenutzt ist. Hierdurch baut die Sitzgestellvorrichtung 10 nochmals kompakter, als dies bisher der Fall ist.

Das Zugfederelement 81 ist in einer entsprechenden Schlitzaufnahme 82 besonders günstig an dem unteren Brückenteilelement 62 eingehängt. Oberseitig ist noch eine Zugstufeneinstelleinrichtung 83 vorgesehen, mittels welcher Vorspannkräfte eingestellt werden können.

Die Zugstufeneinstelleinrichtung 83 besteht neben einem Einstellschraubenelement 84 noch aus einem Supportplattenelement 85, in welchem einerseits das Einstellschraubenelement 84 von oben her eingeschraubt und andererseits das Zugfederelement 81 von unten her eingehängt werden können.

Insbesondere die vorstehend beschriebenen Komponenten 80 bis 85 ermöglichen im Sinne der Erfindung eine manuelle Gewichtseinstellung.

Zum Abdecken der Mechanik kann rückseitig noch eine entsprechend ausgeformte Abdeckeinrichtung 90 vorgesehen werden.

Vorteilhafter Weise erfordern die vorliegenden Fahrzeugsitze 1 und 101 neben der Bodenplatte 14 und den Brückenelementen 61 und 62 keine weiteren wesentlichen Blechteile zum Realisieren der Sitzgestellvorrichtung 10, so dass diese baulich extrem einfach umgesetzt werden kann.

Es versteht sich, dass es sich bei dem vorstehend erläuterten Ausführungsbeispiel lediglich um eine erste Ausgestaltung des erfindungsgemäßen Fahrzeugsitzes handelt. Insofern beschränkt sich die Ausgestaltung der Erfindung nicht auf dieses erste Ausführungsbeispiel.

### Bezugszeichenliste

- 1: Fahrzeugsitz
- 2: Nutzfahrzeugsitz
- 3: Nutzkraftfahrzeug
- 4: Fahrzeugkabinenboden
- 5: Sitzteil
- 6: Rückenlehnenteil
- 7: Fahrzeugsitzschale
- 8: einziges Polstersitzteil
- 8A: Sitzpolsterteil
- 8B: Rückenlehnenpolsterteil
- 10: Sitzgestellvorrichtung
- 11: Rohrkonstruktion
- 12: ortsfest angeordneter Gestellteil
- 13: gefedert angeordneter Gestellteil
- 14: Bodenplatte
- 15: Vorwärtsfahrtrichtung
- 20: erste Teilrohrkonstruktion
- 21: erstes L-förmig gebogenes Rohrelement
- 22: zweites L-förmig gebogenes Rohrelement
- 23: Vertikalrohrelementbereiche
- 24: Horizontalrohrelementbereiche
- 25: Federfunktionsabschnitte
- 26: Verbindungsabschnitte
- 27: Krümmerabschnitte
- 28: Halte- und Führungsbereich
- 29: erste Schraubverbindung
- 29A: Schraubenelement
- 29B: Kontermutterelement
- 29C: Längsverstellungsgriffelement
- 30: zweite Schraubverbindung
- 30A: Schraubenelement
- 30B: Kontermutterelement
- 30C: Längsverstellungsgriffelement
- 31: Langlöcher
- 32: Ausgangslage
- 33: Losdrehrichtung
- 34: Durchgangslagen
- 35: hinter Endlage
- 36: Translationsrichtung
- 40: Vertikalhauptfederungseinrichtung
- 41: erstes Spiralfederelement
- 42: zweites Spiralfederelement
- 43: Längserstreckung
- 50: weitere Teilrohrkonstruktion
- 51: erstes weiteres L-förmig gebogenes Rohrelement
- 52: zweites weiteres L-förmig gebogenes Rohrelement
- 53: weitere Vertikalrohrelementbereiche
- 54: weitere Horizontalrohrelementbereiche
- 55: breite Auflage
- 56: Blindstopfen
- 57: Vertikalebene
- 58: Vertikalhauptfederrichtung
- 60: Brückeneinrichtung
- 61: oberes Brückenteilelement
- 62: unteres Brückenteilelement
- 63: Bolzenelemente
- 64: Bohrungen
- 65: Querbohrungen
- 66: Haltestifte
- 67: Bohrungen
- 68: weitere obere Querbohrungen
- 69: Aufnahmelöcher
- 70: Lagerbuchsen
- 71: Schwingungsdämpfungselemente
- 72: Trockenreibelemente
- 80: Gewichtseinstelleinrichtung
- 81: Zugfederelement
- 82: Schlitzaufnahme
- 83: Zugstufeneinstelleinrichtung
- 84: Einstellschraubenelement
- 85: Supportplattenelement
- 90: Abdeckeinrichtung

- 101: Fahrzeugsitz
- 105: Sitzteil
- 106: Rückenlehnenteil

## Patentansprüche

1. Fahrzeugsitz (1; 101) für ein Fahrzeug, insbesondere Nutzfahrzeugsitz (2) für ein landwirtschaftliches Nutzkraftfahrzeug, mit einem Sitzteil (5; 105), mit einem Rückenlehnenteil (6; 106), mit einer Vertikalhauptfederungseinrichtung (40) umfassend Spiralfederelemente (41, 42) und mit einer Sitzgestellvorrichtung (10) umfassend einen ortsfest angeordneten Gestellteil (12), welcher karosserieseitig (4) des Fahrzeugs befestigbar ist, und umfassend einen gefedert angeordneten Gestellteil (13), welcher das Sitzteil (5; 105) und das Rückenlehnenteil (6; 106) trägt, wobei die Sitzgestellvorrichtung (10) eine Rohrkonstruktion (11) umfasst, bei welcher erste Rohrelemente (21, 22) der Sitzgestellvorrichtung (10) zumindest teilweise innerhalb der Spiralfederelemente (41, 42) der Vertikalhauptfederungseinrichtung (40) angeordnet sind, wobei das ortsfest angeordnete Gestellteil (12) eine erste Teilrohrkonstruktion (20) mit den ersten Rohrelementen (21, 22) der Sitzgestellvorrichtung (10) umfasst, wobei diese ersten Rohrelemente (21, 22) zumindest teilweise jeweils innerhalb der Spiralfederelemente (41, 42) angeordnet sind, und die ersten Rohrelemente (21, 22) Vertikalrohrelementbereiche (23) des ortsfest angeordneten Gestellteils (12) umfassen, die im Wesentlichen senkrecht gegenüber Horizontalrohrelementbereichen (24) ausgerichtet zumindest teilweise innerhalb vertikal angeordneter Spiralfederelemente (41, 42) angeordnet sind, **dadurch gekennzeichnet, dass** die Vertikalrohrelementbereiche (23) über einen Krümmerabschnitt (27) mit den Horizontalrohrelementbereichen (24) verbunden sind.

2. Fahrzeugsitz (1; 101) nach Anspruch 1,
**dadurch gekennzeichnet, dass**
das gefederte gelagerte Gestellteil (13) zumindest teilweise innerhalb einer Vertikalebene (57), aufgespannt von den Rohrelementen (21, 22), federnd gelagert angeordnet ist.

3. Fahrzeugsitz (1; 101) nach einem der Ansprüche 1 bis 2,
**dadurch gekennzeichnet, dass**
die Vertikalhauptfederungseinrichtung (40) zumindest teilweise innerhalb einer Vertikalebene (57), aufgespannt von den Rohrelementen (21, 22), angeordnet ist, und insbesondere die Spiralfederelemente (41, 42) sich entlang dieser Vertikalebene (57) oder parallel hierzu erstreckend angeordnet sind.

4. Fahrzeugsitz (1; 101) nach einem der Ansprüche 1 bis 3,
**dadurch gekennzeichnet, dass**
das gefedert angeordnete Gestellteil (13) eine weitere Teilrohrkonstruktion (50) mit weiteren Rohrelementen (51, 52) der Sitzgestellvorrichtung (10) umfasst, bei welcher die weiteren Rohrelemente (51, 52) weitere Vertikalrohrelementbereiche (53) des gefedert angeordneten Gestellteils (13) ausgestalten, wobei die weiteren Vertikalrohrelementbereiche (53) sich innerhalb einer von ersten Vertikalrohrelementbereichen (23) des ortsfest angeordneten Gestellteils (12) aufgespannten Vertikalebene (57) erstreckend angeordnet sind.

5. Fahrzeugsitz (1; 101) nach Anspruch 4,
**dadurch gekennzeichnet, dass**
die weiteren Vertikalrohrelementbereiche (53) des gefedert angeordneten Gestellteils (13) zwischen den ersten Vertikalrohrelementbereichen (23) des ortsfest angeordneten Gestellteils (12) angeordnet sind.

6. Fahrzeugsitz (1; 101) nach Anspruch 4 oder 5,
**dadurch gekennzeichnet, dass**
die weiteren Vertikalrohrelementbereiche (53) des gefedert angeordneten Gestellteils (13) im Wesentlichen parallel zueinander und die weiteren Horizontalrohrelementbereiche (54) des gefedert angeordneten Gestellteils (13) V-förmig zueinander angeordnet sind.

7. Fahrzeugsitz (1; 101) nach einem der Ansprüche 1 bis 6,
**dadurch gekennzeichnet, dass**
die Sitzgestellvorrichtung (10) eine Brückeneinrichtung (60) mit einem oberen Brückenteilelement (61) und einem unteren Brückenteilelement (62) zum konstruktiven Verbinden des ortsfest angeordneten Gestellteils (12) und des gefedert angeordneten Gestellteils (13) umfasst, wobei das obere Brückenteilelement (61) und das untere Brückenteilelement (62) zumindest teilweise in einer von ersten Rohrelementen (21, 22) des ortsfest angeordneten Gestellteils (12) aufgespannten Vertikalebene (57) angeordnet sind.

8. Fahrzeugsitz (1; 101) nach einem der Ansprüche 1 bis 7,
**dadurch gekennzeichnet, dass**
die Sitzgestellvorrichtung (10) eine Schwingungsdämpfereinrichtung mit Schwingungsdämpfungselementen (71) umfasst, welche zumindest einige der Rohrelemente (21, 22, 51, 52) der Sitzgestellvorrichtung (10) konzentrisch umgeben.

9. Fahrzeugsitz (1; 101) nach einem der Ansprüche 1 bis 8,
**dadurch gekennzeichnet, dass**
die Sitzgestellvorrichtung (10) eine Gewichtseinstelleinrichtung (80) mit wenigstens einem Zugfederelement (81) umfasst, mittels welchem Vorspannkräfte der Spiralfederelemente (41, 42) in Abhängigkeit eines Passagiers variabel einstellbar sind, wobei insbesondere die Gewichtseinstelleinrichtung (80) zumindest teilweise in einer von ersten Rohrelementen (21, 22) des ortsfest angeordneten Gestellteils (12) aufgespannten Vertikalebene (57) angeordnet ist, und insbesondere das Zugfederelement (81) sich entlang dieser Vertikalebene (57) oder parallel hierzu erstreckend angeordnet ist.

10. Fahrzeugsitz (1; 101) nach Anspruch 9,
**dadurch gekennzeichnet, dass**
die Gewichtseinstelleinrichtung (80) sowohl zwischen ersten Vertikalrohrelementbereichen (23) des ortsfest angeordneten Gestellteils (12) als auch zwischen weiteren Vertikalrohrelementbereichen (53) des gefedert angeordneten Gestellteils (13) angeordnet ist.

11. Nutzkraftfahrzeug (3), insbesondere Traktor, mit einem Fahrzeugsitz (1; 101),
**gekennzeichnet durch**
einen Fahrzeugsitz (1; 101) nach einem der vorhergehenden Ansprüche.

## Claims

1. Vehicle seat (1; 101) for a vehicle, in particular a commercial vehicle seat (2) for an agricultural commercial motor vehicle, comprising a seat part (5; 105), a backrest part (6; 106), a vertical main suspension device (40) that comprises coil spring elements (41, 42), and a seat frame apparatus (10) that comprises a stationary frame part (12), which can be fastened to the body (4) of the vehicle, and comprises a spring-mounted frame part (13), which supports the seat part (5; 105) and the backrest part (6; 106),
the seat frame apparatus (10) comprising a tube structure (11), in which first tube elements (21, 22) of the seat frame apparatus (10) are arranged at least in part within the coil spring elements (41, 42) of the vertical main suspension device (40), the stationary frame part (12) comprising a first partial tube structure (20) having the first tube elements (21, 22) of the seat frame apparatus (10), said first tube elements (21, 22) being arranged at least in part within the coil spring elements (41, 42), respectively, and the first tube elements (21, 22) comprising vertical tube element regions (23) of the stationary frame part (12) that are arranged at least in part within vertical coil spring elements (41, 42) so as to be oriented substantially perpendicularly to horizontal tube element regions (24),
**characterised in that**
the vertical tube element regions (23) are connected to the horizontal tube element regions (24) by means of an elbow portion (27).

2. Vehicle seat (1; 101) according to claim 1,
**characterised in that**
the spring-mounted frame part (13) is arranged, in a spring-mounted manner, at least in part within a vertical plane (57), which is spanned by the tube elements (21, 22).

3. Vehicle seat (1; 101) according to any of claims 1 to 2,
**characterised in that**
the vertical main suspension device (40) is arranged at least in part within a vertical plane (57), which is spanned by the tube elements (21, 22), and in particular the coil spring elements (41, 42) are arranged so as to extend along said vertical plane (57) or in parallel therewith.

4. Vehicle seat (1; 101) according to any of claims 1 to 3,
**characterised in that**
the spring-mounted frame part (13) comprises a further partial tube structure (50) having further tube elements (51, 52) of the seat frame apparatus (10), in which structure the further tube elements (51, 52) form further vertical tube element regions (53) of the spring-mounted frame part (13), the further vertical tube element regions (53) being arranged so as to extend within a vertical plane (57) spanned by first vertical tube element regions (23) of the stationary frame part (12).

5. Vehicle seat (1; 101) according to claim 4,
**characterised in that**
the further vertical tube element regions (53) of the spring-mounted frame part (13) are arranged between the first vertical tube element regions (23) of the stationary frame part (12).

6. Vehicle seat (1; 101) according to either claim 4 or claim 5,
**characterised in that**
the further vertical tube element regions (53) of the spring-mounted frame part (13) are arranged substantially in parallel with one another, and the further horizontal tube element regions (54) of the spring-mounted frame part (13) are arranged in a V shape with respect to one another.

7. Vehicle seat (1; 101) according to any of claims 1 to 6,
**characterised in that**
the seat frame apparatus (10) comprises a bridge device (60) having an upper bridge part element (61) and a lower bridge part element (62) for structurally connecting the stationary frame part (12) and the spring-mounted frame part (13), the upper bridge part element (61) and the lower bridge part element (62) being arranged at least in part in a vertical plane (57) spanned by first tube elements (21, 22) of the stationary frame part (12).

8. Vehicle seat (1; 101) according to any of claims 1 to 7,
**characterised in that**
the seat frame apparatus (10) comprises a vibration-damping device having vibration-damping elements (71) that concentrically surround at least some of the tube elements (21, 22, 51, 52) of the seat frame apparatus (10).

9. Vehicle seat (1; 101) according to any of claims 1 to 8,
**characterised in that**
the seat frame apparatus (10) comprises a weight adjustment device (80) having at least one tension spring element (81), by means of which element preloading forces of the coil spring elements (41, 42) can be variably adjusted on the basis of a passenger, in particular the weight adjustment device (80) being arranged at least in part in a vertical plane (57) spanned by first tube elements (21, 22) of the stationary frame part (12), and in particular the tension spring element (81) being arranged so as to extend along said vertical plane (57) or in parallel therewith.

10. Vehicle seat (1; 101) according to claim 9,
**characterised in that**
the weight adjustment device (80) is arranged both between first vertical tube element regions (23) of the stationary frame part (12) and between further vertical tube element regions (53) of the spring-mounted frame part (13).

11. Commercial motor vehicle (3), in particular a tractor, comprising a vehicle seat (1; 101),
**characterised by**
a vehicle seat (1; 101) according to any of the preceding claims.

## Revendications

1. Siège de véhicule (1 ; 101) pour un véhicule, en particulier siège de véhicule utilitaire (2) pour un véhicule utilitaire agricole,
avec une partie siège (5 ; 105), avec une partie dossier (6 ; 106), avec une suspension principale verticale (40) comportant des éléments de ressort en spirale (41, 42) et avec un dispositif de carcasse de siège (10) comportant une partie de carcasse (12) montée fixe, laquelle est apte à être fixée côté carrosserie (4) du véhicule, et comportant une partie de carcasse (13) montée de façon élastique, laquelle porte la partie siège (5 ; 105) et la partie dossier (6 ; 106),
le dispositif de carcasse de siège (10) comportant une construction de tubes (11) dans laquelle des premiers éléments tubulaires (21, 22) du dispositif de carcasse de siège (10) sont disposés au moins en partie dans les éléments de ressort en spirale (41, 42) de la suspension principale verticale (40), la partie de carcasse (12) montée fixe comportant une première construction de tronçons tubulaires (20) avec les premiers éléments tubulaires (21, 22) du dispositif de carcasse de siège (10), ces premiers éléments tubulaires (21, 22) étant disposés au moins en partie respectivement dans les éléments de ressort en spirale (41, 42), et les premiers éléments tubulaires (21, 22) comportant des zones d'éléments tubulaires verticaux (23) de la partie de carcasse (12) montée fixe, qui sont disposées au moins en partie dans des éléments de ressort en spirale (41, 42) disposés verticalement, orientés essentiellement perpendiculairement à des zones d'éléments tubulaires horizontaux (24),
**caractérisé par le fait que**
les zones d'éléments tubulaires verticaux (23) sont liées aux zones d'éléments tubulaires horizontaux (24) par une section coudée (27).

2. Siège de véhicule (1 ; 101) selon la revendication 1,
**caractérisé par le fait que**
la partie de carcasse (13) montée de façon élastique est disposée montée de façon élastique au moins en partie dans un plan vertical (57) défini à partir des éléments tubulaires (21, 22).

3. Siège de véhicule (1 ; 101) selon l'une des revendications 1 à 2,
**caractérisé par le fait que**
la suspension principale verticale (40) est disposée au moins partiellement dans un plan vertical (57), défini à partir des éléments tubulaires (21, 22), et en particulier les éléments de ressort en spirale (41, 42) sont disposés s'étendant le long de ce plan vertical (57) ou parallèlement à celui-ci.

4. Siège de véhicule (1 ; 101) selon l'une des revendications 1 à 3,
**caractérisé par le fait que**
la partie de carcasse (13) montée de façon élastique comporte une autre construction de tronçons tubulaires (50) avec d'autres éléments tubulaires (51, 52) du dispositif de carcasse de siège (10), dans laquelle les autres éléments tubulaires (51, 52) aménagent d'autres zones d'éléments tubulaires verticaux (53) de la partie de carcasse (13) montée de façon élastique, les autres zones d'éléments tubulaires verticaux (53) étant disposées s'étendant dans un plan vertical (57) défini à partir de premières zones d'éléments tubulaires verticaux (23) de la partie de carcasse (12) montée fixe.

5. Siège de véhicule (1 ; 101) selon la revendication 4,
**caractérisé par le fait que**
les autres zones d'éléments tubulaires verticaux (53) de la partie de carcasse (13) montée de façon élastique sont disposées entre les premières zones d'éléments tubulaires verticaux (23) de la partie de carcasse (12) montée fixe.

6. Siège de véhicule (1 ; 101) selon l'une des revendications 4 ou 5,
**caractérisé par le fait que**
les autres zones d'éléments tubulaires verticaux (53) de la partie de carcasse (13) montée de façon élastique sont disposées essentiellement parallèlement entre elles et les autres zones d'éléments tubulaires horizontaux (54) de la partie de carcasse (13) montée de façon élastique sont disposées entre elles en forme de V.

7. Siège de véhicule (1 ; 101) selon l'une des revendications 1 à 6,
**caractérisé par le fait que**
le dispositif de carcasse de siège (10) comporte un dispositif formant pont (60) avec un sous-élément de pont supérieur (61) et un sous-élément de pont inférieur (62) pour la liaison constructive de la partie de carcasse (12) montée fixe et de la partie de carcasse (13) montée de façon élastique, le sous-élément de pont supérieur (61) et le sous-élément de pont inférieur (62) étant disposés au moins en partie dans un plan vertical (57) défini à partir de premiers éléments tubulaires (21, 22) de la partie de carcasse (12) disposée fixe.

8. Siège (1 ; 101) selon l'une des revendications 1 à 7,
**caractérisé par le fait que**
le dispositif de carcasse de siège (10) comporte un dispositif amortisseur de vibrations avec des éléments d'amortissement de vibrations (71), lesquels entourent de façon concentrique au moins quelques-uns des éléments tubulaires (21, 22, 51, 52) du dispositif de carcasse de siège (10)

9. Siège de véhicule (1 ; 101) selon l'une des revendications 1 à 8,
**caractérisé par le fait que**
le dispositif de carcasse de siège (10) comporte un dispositif de réglage de poids (80) avec au moins un élément de ressort de traction (81), au moyen duquel des forces de pré-tension des éléments de ressort en spirale (41, 42) sont aptes à être réglées de façon variable en fonction d'un passager, dans lequel en particulier le dispositif de réglage de poids (80) est disposé au moins en partie dans un plan vertical (57) défini à partir de premiers éléments tubulaires (21, 22) de la partie de carcasse (12) montée fixe, et en particulier l'élément de ressort de traction (81) est disposé s'étendant le long de ce plan vertical (57) ou parallèlement à celui-ci.

10. Siège de véhicule (1 ; 101) selon la revendication 9,
**caractérisé par le fait que**
le dispositif de réglage de poids (80) est disposé non seulement entre des premières zones d'éléments tubulaires verticaux (23) de la partie de carcasse (12) disposée fixe mais encore entre d'autres zones d'éléments tubulaires verticaux (53) de la partie de carcasse (13) montée de façon élastique.

11. Véhicule utilitaire (3), en particulier tracteur, comportant un siège de véhicule (1 ; 101),
**caractérisé par**
un siège de véhicule (1 ; 101) selon l'une des revendications précédentes.
